# EUROPEAN PATENT APPLICATION

(11) **EP 0 748 125 A1**
(43) Date of publication of application: **11.12.1996**
(21) Application number: 96109185.7
(22) Date of filing: 07.06.1996
(51) Int. Cl.: H04N 7/58, G06F 13/38

(54) **Improvements in or relating to image display systems**

(30) Priority: 07.06.1995 US 484743
(71) Applicant: TEXAS INSTRUMENTS INCORPORATED, Dallas Texas 75265 (US)
(72) Inventor: Sampsell, Jeffrey B., Evanston, IL 60201 (US)
(74) Representative: Schwepfinger, Karl-Heinz, Dipl.-Ing.

(57) **Abstract**

An open architecture display system which integrates many types of image processing equipment into a multi-use system. The display system incorporates a control bus (104), an audio bus (106), and a video bus (108) on a common system backplane (102). Each of the busses may be comprised of multiple sub-busses which operate independently of each other to allow the display system to process multiple images simultaneously. The system backplane (102) includes connectors (110) in communication with the system backplane control (104), audio (106), and video (108) busses. Optional circuit boards (112) may be plugged into the display system using the connectors (110) provided on the system backplane to provide additional capabilities to the display system.

## Description

### FIELD OF THE INVENTION

This invention relates to the field of image display systems, more particularly to architectures for video display systems that are capable of manipulating images from multiple sources.

### BACKGROUND OF THE INVENTION

Several types of display systems are in common usage. For example, television systems, computer terminals, business projectors for use in conference room settings, and closed-circuit information displays have all become very common. Each of these systems uses a video signal, or produces an image, that may have a unique format, resolution, or frame rate.

Because each type of display system has unique characteristics, video signals produced for one system are difficult to transfer to a different type system. This forces the system user to expend effort and expense transferring the images from one format to another before the images can be displayed or manipulated by a different type system.

Present day television systems are also impractical to upgrade. Without the capability to upgrade a television system, the system risks obsolescence if television broadcast standards change. Because a new broadcast format may be incompatible with all existing televisions, broadcasters are unwilling to change to a new format until the market is ready to receive the new format. Yet, until broadcasters transmit a new signal, consumers are unlikely to purchase television sets capable of receiving the new signal. This dilemma is especially evident in the slow move towards a US high-definition television (HDTV) standard.

### SUMMARY OF THE INVENTION

Objects and advantages will be obvious, and will in part appear hereinafter and will be accomplished by the present invention which provides an open architecture for a display system. The system incorporates a control bus, an audio bus, and a video bus on a common system backplane. Each of the busses may be comprised of multiple sub-busses which operate independently of each other. The system backplane also includes at least one connector in communication with the control, audio, and video busses to allow optional circuit boards to be plugged into the display system.

Accordingly, the present invention provides a display system comprising, a system backplane circuit having an audio bus, a control bus and a video bus, said video bus including at least two video sub-busses for transferring image data between an image source and an image receiver and, at least one connector electrically connected to the control bus, the audio bus and at least one of the video sub-busses.

The display system allows integration of many types of image processing equipment that heretofore have been largely incompatible. In doing so, the display system provides a high degree of flexibility which will allow the display system to be uniquely configured to meet the particular needs of the user, and will enable the display system to be reconfigured as image transmission standards change.

### BRIEF DESCRIPTION OF THE DRAWINGS

For a more complete understanding of the present invention, and the advantages thereof, reference is now made to the following descriptions taken in conjunction with the accompanying drawings, in which:
FIG. 1 is a schematic diagram of an open architecture display system backplane in accordance with the present invention comprised of three system busses and a series of connectors, wherein two optional circuit boards are plugged into the connectors;
FIG. 2 is a schematic diagram of an open architecture display system in accordance with the present invention with several optional circuit boards plugged into the backplane; and
FIG. 3 is a schematic diagram of an open architecture display system in accordance with the present invention showing multiple video sub-busses and singular control and audio busses, and showing tuner and display driver circuits incorporated onto the system backplane.

### DETAILED DESCRIPTION OF THE PREFERRED EMBODIMENTS

Various image formats, input means, and output means could be accommodated by a display system comprised of multiple image receivers and transmitters sharing a common bus system. A system chassis which provides an open bus structure allows a great degree of flexibility. Such a system is capable of being upgraded as the needs or preferences of the user grow, and is less likely to be rendered obsolete by a change in image transmission format.

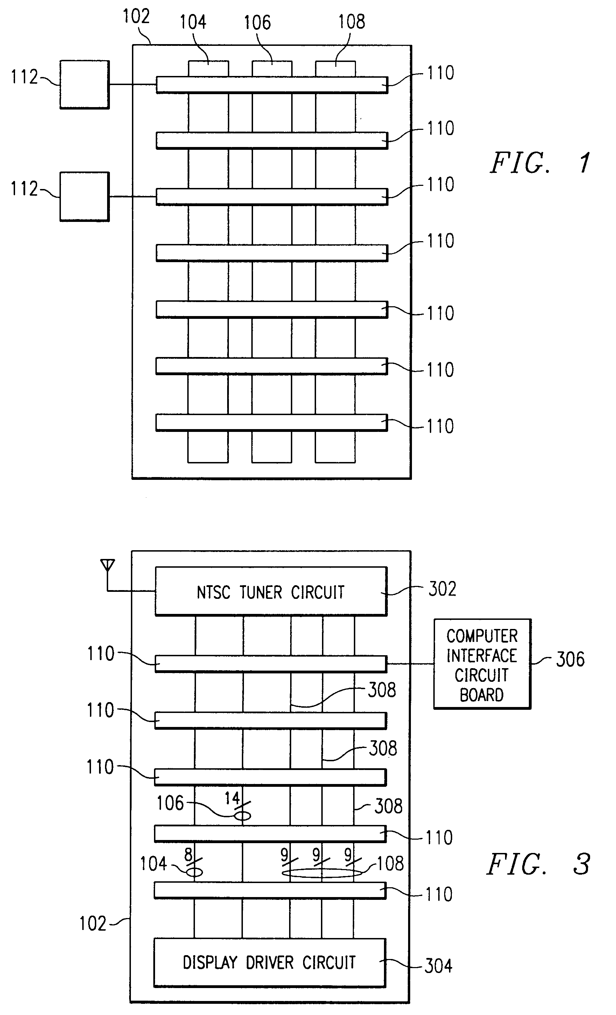

A major component of one embodiment of a flexible display system is a system motherboard, or backplane 102, shown in Figure 1. In Figure 1, the backplane 102 includes three independent busses, a control bus 104, an audio bus 106, and a video bus 108. Each bus is comprised of multiple signal paths, or traces, each signal path for conducting an electrical signal along the length of the signal path.

The backplane 102 has a series of connectors 110 to allow printed circuit boards 112 to be connected to the system busses easily. Each connector 110 typically is in electrical contact with every signal path in each bus. However, as discussed below, under some circumstances it may be advantageous to only connect a given connector to a subset of the signal paths.

A unique feature of the flexible display system is that the busses are each comprised of multiple, parallel sub-busses. Each sub-bus operates independently of the other sub-busses. For example, if the system is designed to transmit images along the backplane 102 using 9-bit image data words, video bus 108 may be 36 bits wide. In this example the video bus 108 has the capability to simultaneously transfer four images, wherein each image is independently transferred on one of the four sub-busses comprising video bus 108.

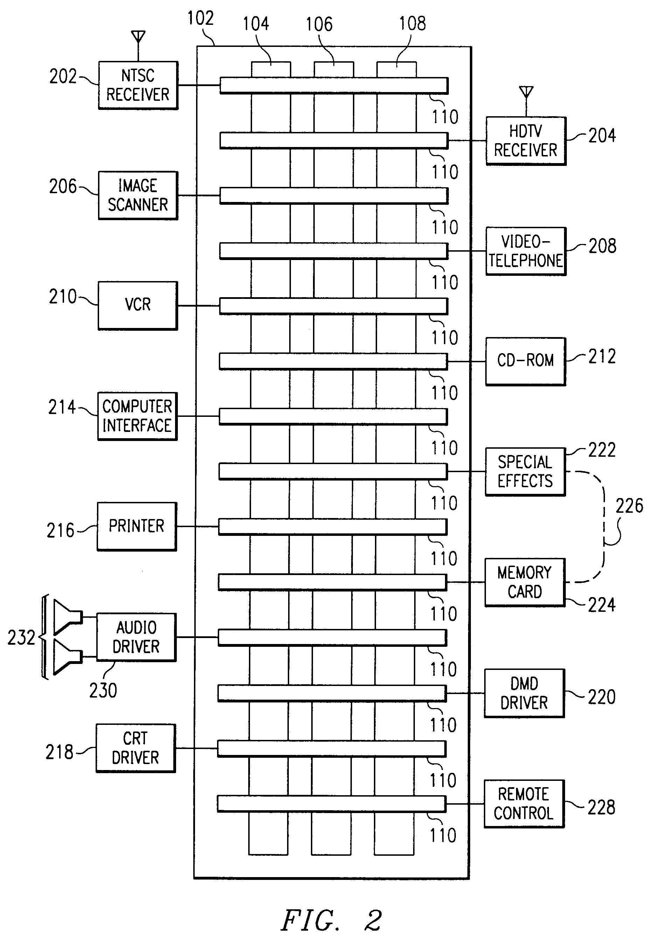

Multiple image sources, each fabricated on an individual circuit board 112, may be connected to the display system backplane 102 via the connectors 110. For example, one embodiment of a populated system backplane 102, shown in Figure 2, includes an NTSC-format television receiver/tuner circuit 202, an HDTV-format television receiver/tuner circuit 204, an, image scanner interface 206, a video-telephone interface 208, a video cassette player or player/recorder (VCR) interface 210, a laser disk or CD-ROM player interface 212, and a computer graphics interface 214. The selection of input circuit cards is limited only by the availability of image data input sources.

The display system of Figure 2 also includes several output devices connected to the system backplane 102. The output devices in Figure 2 include, a printer interface circuit 216, a cathode ray tube driver 218, and a digital micromirror device (DMD) display driver 220. Each of these output devices may receive image data from any input device via one of the independent video sub-busses on the system backplane 102. Therefore, multiple images may be sent simultaneously, one on each of the video sub-busses.

Some of the more complex video devices may require two or more circuit boards to accommodate the required circuitry. For example, some special effects circuit boards 222 use data from several frame simultaneously to enhance an image or to track a feature of an image. These circuit boards may require a separate memory circuit board 224 that is capable of storing the data from several frames. The special effects circuit board 222 and the memory circuit board 224 may communicate using either the system busses or a dedicated jumper cable 226.

Devices that neither receive nor output a video image may also be connected to the system bus 102. For example, an infrared remote control interface 228 may connect to the control bus 104 of the system backplane. Also, an audio driver 230 may connect to the audio 106 and control 104 busses of the system backplane 102. The audio driver 230 receives the digital audio signals from the system audio bus 106, converts the digital audio signals to analog audio signals, and amplifies the analog audio signals to drive audio speakers 232.

The digital video signals on the system backplane video bus typically vary in format depending on the video source and the intended use of the video signal. However, the input boards may translate every input signal to a common image format or resolution. Translating all input images to a common image format for transmission on the system backplane may create image artifacts, but the translation typically simplifies the design of the output boards because they can rely on receiving a constant-format input image.

Because the system is designed to be easily upgraded and to avoid limiting the system's available applications, many alternative constructions are available. For example, there may be fewer sub-busses than connectors 110 for circuit boards. Figure 3 depicts a system backplane that includes five connectors 110 for add-on circuit boards which only has three 9-bit video sub-busses 308. Having less video sub-busses than circuit cards prevents every circuit board from outputting an image simultaneously. However, because at least some of the circuit boards are output-only devices, not all of the circuit boards are capable of outputting an image. Additionally, it is unlikely that a user will desire to operate all of the circuit boards simultaneously.

The number of audio sub-busses may also be limited. Because not all of the circuit boards are capable of using audio, the system designer may reduce the number of available audio sub-busses. For example, a printer driver is incapable of using audio and therefore does not access to an audio sub-bus.

Another way to reduce the number of audio sub-busses is to compress the audio data and transmit all of the compressed audio data on one bus. Compressing the audio data requires additional circuitry and complicates the system design, but the benefits of a single audio bus may outweigh the disadvantage of additional circuitry. Because the audio data has a much lower bandwidth compared to the video data, even after the audio data is compressed and combined, the audio bus typically has a lower bandwidth than the video sub-busses. Therefore, the data from all of the audio sub-busses may be compressed and combined on a single bus without raising the design requirements of the system backplane. Figure 3 shows a system backplane that includes only one 14-bit audio bus 106 which is not divided into sub-busses.

The control signals may also be transmitted on a single bus rather than using multiple control sub-busses. Because the system may only require control signals to initiate a data transfer, the control signals likely will not have to be compressed in order to send all of the control signals on a common control bus. Alternatively, the control signals may be transferred on the video sub-busses if an additional signal is included to indicate whether the transmitted data words are image data words or control words. The display system shown in Figure 3 has a single 8-bit control bus.

The disclosed system will allow consumers to configure their display systems to meet their own preferences. A consumer may start with a simple NTSC-only television system and later upgrade the system to interface with a computer and printer. Alternatively, retailers may offer a few models, each model representing a unique combination of features and targeted at a particular market segment.

Some models of the display system may have certain functions built into the system backplane 102. For example, the display system of Figure 3 includes an NTSC tuner circuit 302 and a DMD display driver circuit 304 on the display system backplane 102. A computer interface circuit board 306 has been added to allow the DMD display driver 304 to display images from either the attached computer system or an NTSC broadcast. Building common circuits onto the display system backplane 102 typically reduces the cost of the system, but may limit the flexibility of the display system.

The system chassis physically may be designed to allow upgrade circuit boards to plug into the system backplane either by removing a cover and inserting the circuit board, similar to a personal computer design, or by merely pushing a cartridge through a panel of the system, much like present-day home video games.

Because the system is extremely flexible, a circuit board designed to be used in the system may be required to operate with different combinations of other circuit boards. Alternatively, the same combination of boards may be required to communicate when some of the boards are in different connectors or using different system backplane configurations. Therefore, there must be some way to communicate to each of the boards which of the sub-busses they will receive data on.

There are several methods which may be used to configure each circuit board. First, the display system may include a controller board for monitoring what circuit boards are connected to the system backplane and configuring each circuit board to transmit or receive on a particular sub-bus. Or, each circuit board may be capable of polling the other circuit boards to determine which sub-busses it should use to communicate. Alternatively, each circuit board may be equipped with jumper switches to allow an installer to hardwire the system configuration. Or, a particular sub-bus may be assigned to a particular type of circuit board, in which case each circuit board is permanently set to only transmit on its assigned subbus. For each configuration alternative there is a trade-off between cost, flexibility, and ease of use.

Thus, although there has been disclosed to this point a particular embodiment for an open architecture video system, it is not intended that such specific references be considered as limitations upon the scope of this invention. Furthermore, having described the invention in connection with certain specific embodiments thereof, it is to be understood that further modifications may now suggest themselves to those skilled in the art.

## Claims

1. A display system comprising:
a system backplane circuit having an audio bus, a control bus and a video bus, said video bus including at least two video sub-busses for transferring image data between an image source and a n image receiver; and
at least one connector electrically connected to the control bus, the audio bus and at least one of the video sub-busses.

2. The display system of Claim 1, wherein each video sub-bus is capable of independently transferring image data between an independent image source and an independent image receiver.

3. The display system of Claim 1 or Claim 2 further comprising; a television tuner circuit fabricated on the system backplane circuit and in electrical communication with at least one of the video sub-busses.

4. The display system of any preceding claim further comprising; a display driver circuit fabricated on the system backplane circuit and in electrical communication with at least one of said video sub-busses.

5. The display system of any preceding claim further comprising; a television tuner circuit electrically connected to at least one of the video sub-busses via the connector.

6. The display system of any preceding claim further comprising; a display driver circuit electrically connected to at least one of the video sub-busses via the connector.

7. The display system of any preceding claim further comprising; an image scanner interface circuit electrically connected to at least one of the video sub-busses via the connector.

8. The display system of any preceding claim further comprising a video cassette recorder interface circuit electrically connected to at least one of the video sub-busses via the connector.

9. The display system of any preceding claim further comprising; a video-telephone interface circuit electrically connected to at least one of the video sub-busses via the connector.

10. The display system of any preceding claim further comprising; a CD-ROM interface circuit electrically connected to at least one of the video sub-busses via the connector.

11. The display system of any preceding claim further comprising; a laser disk interface circuit electrically connected to at least one of the video sub-busses via the connector.

12. The display system of any preceding claim further comprising; a computer graphics interface circuit electrically connected to at least one of the video sub-busses via the connector.

13. The display system of any preceding claim further comprising; a printer interface circuit electrically connected to at least one of the video sub-busses via the connector.

14. The display system of any preceding claim further comprising; a memory circuit electrically connected to at least one of the video sub-busses via the connector.

15. The display system of any preceding claim further comprising; a audio driver circuit electrically connected to at least one of the video sub-busses via the connector.
